Europäisches Patentamt

European Patent Office

Office européen des brevets

(11) Numéro de publication : **0 360 651 B1**

(12) **FASCICULE DE BREVET EUROPEEN**

(45) Date de publication du fascicule du brevet :
**25.11.92 Bulletin 92/48**

(51) Int. Cl.⁵ : **G21C 19/18,** G21C 19/32

(21) Numéro de dépôt : **89402413.2**

(22) Date de dépôt : **05.09.89**

(54) **Dispositif de secours pour la commande du déplacement d'un chariot convoyeur d'assemblage de combustible nucléaire.**

(30) Priorité : **14.09.88 FR 8811979**

(43) Date de publication de la demande :
**28.03.90 Bulletin 90/13**

(45) Mention de la délivrance du brevet :
**25.11.92 Bulletin 92/48**

(84) Etats contractants désignés :
**BE CH DE ES GB LI**

(56) Documents cités :
**DE-A- 2 434 225**
**FR-A- 2 234 637**
**FR-A- 2 520 150**

(73) Titulaire : **FRAMATOME**
**Tour Fiat Cédex 16**
**F-92084 Paris-la-Défense (FR)**

(72) Inventeur : **Renaudin, Robert**
**233, rue du Charenton**
**F-75012 Paris (FR)**
Inventeur : **Tchatalian, Bruno**
**34, rue du Président Wilson**
**F-78230 Le Pecq (FR)**

(74) Mandataire : **Guilguet, Philippe et al**
**Cabinet ARMENGAUD AINE 3, Avenue**
**Bugeaud**
**F-75116 Paris (FR)**

EP 0 360 651 B1

## Description

La présente invention est relative à un dispositif de secours permettant en cas d'incident et en particulier de blocage d'un chariot convoyeur transportant des assemblages de combustible nucléaire dans et hors de l'enceinte d'un réacteur, de désolidariser automatiquement ce chariot de la chaîne ou autre moyen de commande mécanique réalisant normalement son déplacement et de le ramener ensuite de façon sûre, dans une position prédéterminée.

Dans le processus de chargement et de déchargement d'un réacteur nucléaire avec les assemblages combustibles qui constituent le coeur de celui-ci, on utilise de manière usuelle un chariot convoyeur, destiné à supporter et déplacer au moins un assemblage neuf à mettre en place dans le coeur, ou un assemblage usé sorti de celui-ci et à transférer vers une piscine de stockage externe à l'enceinte du réacteur. Le chariot se déplace au cours de ses mouvements à une profondeur convenable sous un niveau d'eau de protection, en roulant sur des rails ou autres moyens de guidage analogues entre une position de réception ou de retrait d'un assemblage neuf ou usé, prévue à l'extérieur de l'enceinte et une position de chargement ou de déchargement de l'assemblage, aménagée à l'intérieur de celle-ci et dans laquelle il est retiré ou mis en place sur le chariot. Entre ces deux positions, le chariot glisse ou roule sur ses rails, généralement sous l'effet d'une chaîne agencée pour permettre d'exercer sur le chariot un effort de poussée ou inversement de traction, cette chaîne étant de préférence commandée au voisinage de la position de réception ou de retrait des assemblages à l'extérieur de l'enceinte. La chaîne présente la propriété de s'enrouler sur elle-même au fur et à mesure que le chariot est tiré vers cette position, ce qui lui permet de n'occuper qu'une place réduite dans la piscine de stockage, et également de présenter une rigidité suffisante lorsqu'elle est déroulée, en faisant alors fonction de tige ou de bras de vérin du chariot pour amener celui-ci vers sa position de chargement ou de déchargement à l'intérieur de l'enceinte du réacteur.

Dans les réalisations d'un mécanisme de ce genre actuellement connues, le chariot convoyeur comporte généralement plusieurs commandes, ce qui exige une coordination précise pour la mise en oeuvre de celles-ci et rend nécessaire le concours d'un personnel nombreux et spécialisé, réparti aux divers postes de manoeuvre successifs. Il en résulte des difficultés lorsque, pour une raison quelconque se produit un coïncement ou un blocage quelconque de ces moyens de commande, le chariot risquant dès lors de ne pouvoir être ramené en position de réception ou de retrait des éléments neufs ou usés à l'extérieur de l'enceinte. Notamment, il est dans ce cas nécessaire de faire intervenir des moyens de déblocage, lourds et encombrants et dont le fonctionnement est complexe, par exemple en utilisant une perche éventuellement télécommandée qui, à travers la hauteur d'eau de protection agit sur un basculeur, propre à dégager, du fait de son pivotement, les dents d'un pignon d'entraînement vis-à-vis d'une crémaillère de commande de déplacement du chariot, avant de pouvoir ramener celui-ci, par exemple au moyen d'un câble lié au châssis de ce chariot et s'enroulant à l'opposé sur le tambour d'un treuil de manoeuvre.

On connaît par ailleurs, par le brevet français FR-A- 2 234 637, un chariot convoyeur pour assemblage de combustible nucléaire, susceptible d'être transféré dans le bâtiment réacteur ou dans un bâtiment annexe, avec un mouvement de va-et-vient à l'intérieur d'un conduit horizontal de communication selon l'axe duquel il se déplace sur des rails porteurs. Le mouvement du chariot est assuré a l'aide d'un bras poussoir dont une extrémité est solidarisée d'une double chaîne, elle-même entraînée sur des pignons de commande. En cas d'incident, en particulier lorsque le chariot se trouve immobilisé à l'intérieur du bâtiment réacteur, il convient de le ramener à l'extérieur de celui-ci ; à cet effet, on utilise un câble muni d'une chape immobilisée par une cheville de cisaillement, de manière telle que, suite à une traction sur le câble, cette cheville soit brisée, en permettant à la chape de venir se bloquer dans l'extrémité du bras poussoir, pour autoriser le retrait de ce dernier et celui du chariot, du fait de la remontée du câble. Mais, dans une telle solution, le bras poussoir reste toujours solidaire du chariot ; or, si l'incident provient du bras lui-même, par exemple lorsque celui-ci se bloque dans le conduit de communication, le dispositif est en défaut, le câble ne permettant pas de ramener ce chariot dans le bâtiment annexe.

La présente invention est relative à un dispositif de secours qui évite ces inconvénients, en procurant notamment une simplification notable des mécanismes nécessaires à la commande de déplacement du chariot convoyeur, en particulier en cas d'incident et notamment de blocage de celui-ci, ce dispositif permettant de désolidariser facilement le chariot de ses organes de commande en particulier de la chaîne de manoeuvre et de le ramener dans une position extérieure à l'enceinte du réacteur, ces opérations s'effectuant de façon sûre et rapide à partir d'un poste unique, ce qui réduit d'autant les personnels nécessaires et la durée d'exposition éventuelle de ceux-ci aux effets d'un environnement hostile.

Dans ce but, le dispositif considéré, dans lequel le chariot convoyeur se déplace sous l'effet d'une chaîne pousseuse-tireuse actionnée par un mécanisme d'entraînement provoquant, selon le sens, son enroulement sur elle-même en colimaçon pour tirer le chariot ou son déroulement en formant alors un élément rigide de poussée du chariot, comportant un organe de liaison entre la chaîne et le chariot, constitué de deux parties réunies ensemble par une goupille propre à être rompue à la demande pour désolidariser les deux parties et libérer le chariot de la chaîne, se caractérise en ce que la rupture de la goupille est réalisée sous l'effet d'une traction exercée à distance du chariot sur un câble de commande de façon telle que, après cette rupture, le câble puisse provoquer une traction sur le chariot pour le ramener librement, indépendamment de la chaîne, dans une position prédéterminée, l'organe de liaison entre la chaîne et le chariot comportant une attache, portée ou solidaire du chariot et reliée aux deux joues parallèles d'un maillon de la chaîne au moyen d'une broche transversale, l'attache et la broche étant réunies par la goupille disposée parallèlement aux joues du maillon.

En fonctionnement normal, la commande de déplacement du chariot est réalisée par l'entraînement de la chaîne dont la structure, en elle-même connue est telle que, selon le sens de son enroulement ou déroulement, elle tire ou pousse le chariot d'une position à une autre, respectivement à l'intérieur et à l'extérieur de l'enceinte du réacteur. En cas de blocage du chariot ou de la chaîne, provoquant l'immobilisation du chariot dans une position intermédiaire quelconque, le dispositif selon l'invention permet alors de séparer à distance de manière sûre et rapide la chaîne et le chariot, en agissant sur un câble qui provoque d'abord la rupture de la goupille de liaison puis exerce sur le chariot un effort de traction le ramenant dans une position choisie, à l'extérieur de l'enceinte, où peuvent être effectuées la réparation nécessaire et la remise en place d'une goupille neuve.

Selon une caractéristique avantageuse du dispositif considéré, la broche transversale qui traverse librement des passages disposés en regard dans les joues du maillon et l'attache respectivement, est immobilisée par rapport à l'attache au moyen de la goupille pendant le fonctionnement normal du chariot. En cas d'incident, un effort exercé sur la broche parallèlement à elle-même, permet de rompre la goupille, la broche se dégageant de l'attache et des joues, en désolidarisant de ce fait ces deux éléments et en permettant alors le déplacement du chariot indépendamment de la chaîne.

De préférence, la broche transversale est montée à coulissement dans un premier logement d'un bloc support, porté par le chariot et comportant une crémaillère actionnée par un pignon plat, monté libre en rotation sur un axe perpendiculaire au pignon et solidaire du bloc support.

Selon une autre caractéristique également, le pignon actionnant la crémaillère de la broche est entraîné en rotation par une autre broche, montée dans le bloc support dans un second logement situé dans le plan du premier mais perpendiculaire à celui-ci, cette seconde broche comportant également une crémaillère engrenant avec le pignon de façon telle que la rotation de celui-ci provoque, selon le cas, des déplacements simultanés et opposés des broches, respectivement vers l'intérieur et l'extérieur du bloc support.

Selon encore une autre caractéristique, la seconde broche est solidarisée à son extrémité extérieure au bloc support d'un embout de liaison avec le câble de traction. Avantageusement, l'embout comporte une noix, propre à venir en appui en fin de course de la tige sous l'effet du pignon sur une butée solidaire du chariot de façon telle qu'un effort de traction exercé sur le câble après rupture de la goupille, amène la noix contre la butée, en provoquant l'entraînement du chariot par le câble. En outre, le bloc support du pignon est monté dans un boîtier étanche qui est supporté par l'axe de rotation du pignon, lui-même disposé sous la face inférieure du chariot.

Dans un mode de réalisation préféré de l'invention, le câble de traction est actionné par un treuil, situé à distance du chariot et sur le tambour duquel s'enroule le câble, guidé vers le chariot jusqu'à l'embout de liaison par des poulies de renvoi. De préférence également, le câble s'enroule sur une poulie mobile, munie d'un contrepoids exerçant une tension constante sur le câble, qui reste tendu en permanence, quelle que soit la position du chariot.

Selon encore une autre caractéristique du dispositif considéré, le chariot comporte des roues se déplaçant sur des rails s'étendant parallèlement au plan de travail de la chaîne pousseuse-tireuse. De préférence, la chaîne s'enroule sur une roue dentée de commande, entraînée par un mécanisme de renvoi à partir d'un ensemble moto-réducteur approprié.

D'autres caractéristiques d'un dispositif de secours pour la commande du déplacement d'un chariot convoyeur, établi conformément à l'invention apparaîtront encore à travers les description qui suit d'un exemple de réalisation, donné à titre indicatif et non limitatif, en référence aux dessins annexés sur lesquels :

- La Figure 1 est une vue schématique partielle de l'enceinte d'un réacteur nucléaire et d'une piscine de stockage pour assemblages de combustible, dont le transfert dans ou hors de l'enceinte est assuré au moyen d'un chariot convoyeur et d'un dispositif selon l'invention.
- La Figure 2 est une vue en coupe verticale à plus grande échelle du chariot convoyeur et du dispositif considéré.
- La Figure 3 est une vue de dessus à plus grande échelle également du mécanisme de commande du chariot.
- Les Figures 4 et 5 sont des vues de détail, illustrant plus particulièrement le mécanisme permettant d'assurer la rupture de la goupille de liaison.
- La Figure 6 illustre un détail de la réalisation du treuil de commande du câble de traction du chariot.

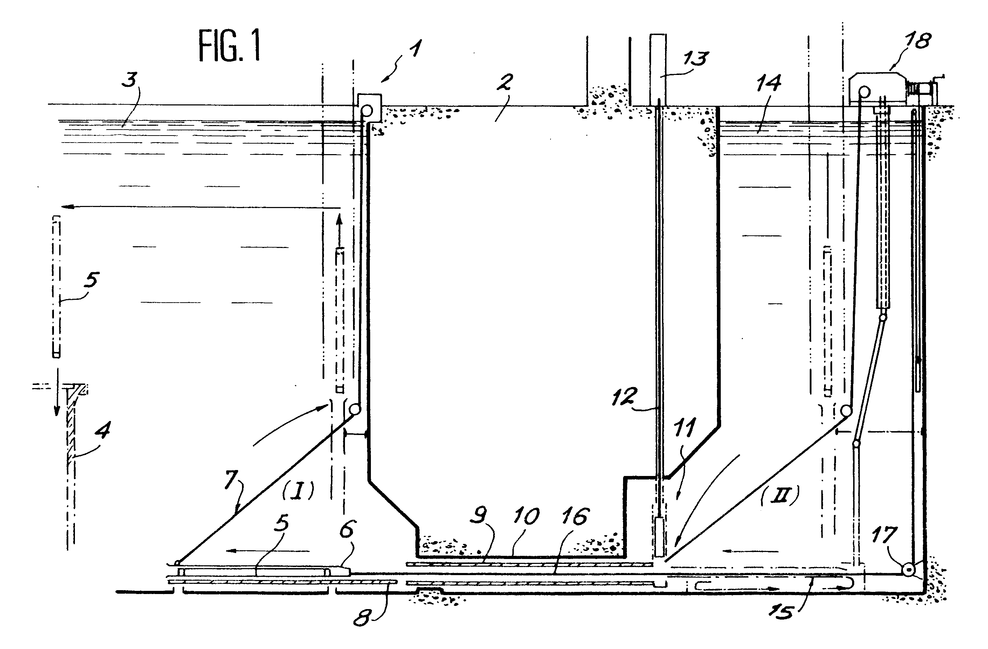

Sur la figure 1, la référence 1 désigne très schématiquement une partie de l'enceinte d'un réacteur nucléaire notamment du type dit à eau pressurisée, comportant des parois épaisses de protection en béton 2, délimitant une zone interne 3 remplie d'eau. Une partie de la cuve du réacteur est représentée en 4, la référence 5 désignant un assemblage de combustible nucléaire destiné à être introduit ou retiré dans le coeur de ce réacteur.

Il doit être ici souligné que, tant la structure du réacteur que les moyens mis en oeuvre pour charger ou décharger le coeur avec les assemblages combustibles 5, sont considérés bien connus dans la technique et n'exigent en conséquence aucune description particulière, ces moyens étant en outre sans relation directe avec l'objet de la présente invention. Sur la Figure 1, un assemblage combustible 5 représenté en traits pleins, est montré en position sensiblement horizontale, porté par un chariot convoyeur 6 amené dans la zone interne 3, dans une région de celle-ci (I) constituant par convention un poste de chargement-déchargement. Le mécanisme permettant de saisir l'assemblage combustible 5 sur son chariot, de le faire passer de la positon horizontale à la position verticale, puis dans cette dernière, de le transférer jusqu'à l'aplomb du coeur au-dessus de la cuve 4, est très schématiquement désigné dans son ensemble sous la référence 7.

Le chariot convoyeur 6 est susceptible de se déplacer sur un chemin de roulement 8, prévu au fond de l'enceinte 1, notamment pour passer de la région (I) et du poste de chargement-déchargement à une région (II) située de l'autre côté de la paroi de protection 2 par rapport à la région (I), et constituant un poste de réception ou de retrait des assemblages combustibles, notamment pour permettre, selon le cas, la mise en place sur le chariot d'un assemblage combustible neuf à introduire dans le coeur ou inversement, la réception et l'enlèvement d'un assemblage combustible usagé, retiré de ce dernier. Dans son mouvement de la région (I) vers la région (II) ou vice versa, le chariot convoyeur 6 traverse un tunnel de guidage 9 ménagé dans un passage 10 prévu à la partie inférieure de la paroi 2, ce tunnel pouvant être ouvert ou fermé par le boisseau 11 d'une vanne, montée à l'extrémité inférieure d'une tige de commande 12, manoeuvrée de l'extérieur de l'enceinte par un mécanisme de commande 13.

La région (II) où se trouve le poste de retrait et de réception est remplie d'eau 14 avec une hauteur nécessaire pour assurer une protection convenable de l'environnement extérieur lors de la manutention des assemblages combustibles 5 et en particulier de ceux, fortement radio-actifs, extrait du coeur. La commande des mouvements de va-et-vient du chariot convoyeur 6 de l'une à l'autre de ces régions (I) et (II) est réalisée au moyen d'une chaîne de manoeuvre 15, dont le détail de la réalisation sera explicité plus loin. En outre, l'une des extrémités du chariot 6 est réunie à un câble de traction 16 permettant, conformément à l'invention, de ramener le chariot intérieur de la région (II) au poste de réception ou de retrait, en cas d'incident se produisant sur la chaîne de manoeuvre 15. Le câble 16 est renvoyé sur une poulie de guidage 17 vers un treuil de commande 18, prévu à la partie supérieure de l'enceinte 1.

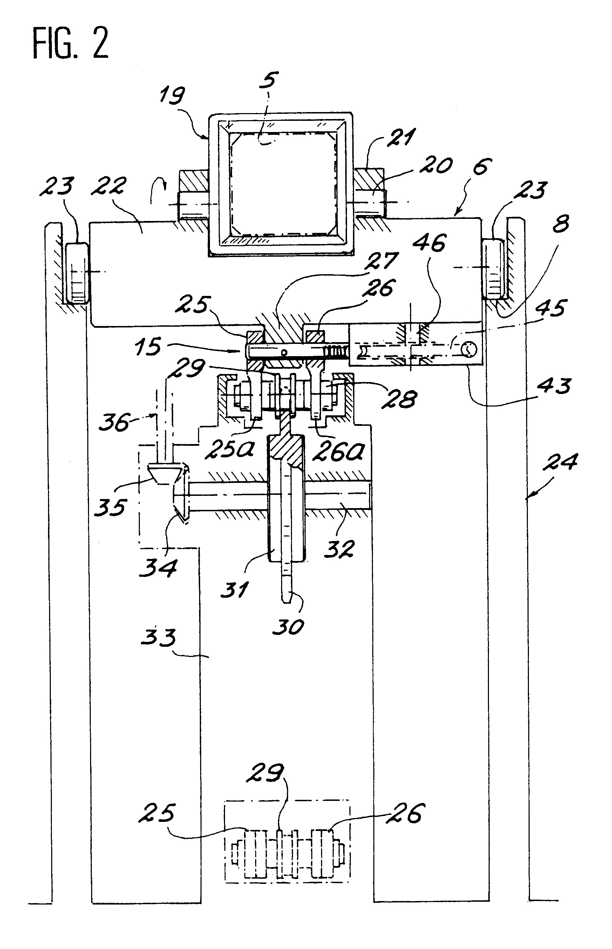

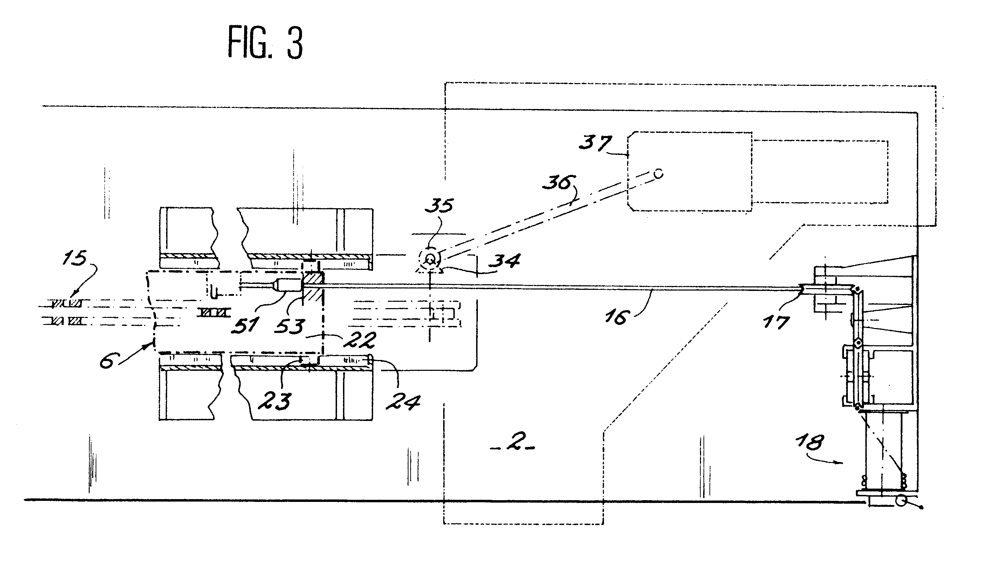

Les Figures 2 et 3 illustrent avec plus de détail la réalisation particulière du chariot convoyeur 6 et d'un assemblage combustible 5 monté dans ce dernier à l'intérieur d'une structure porteuse 19 (Figure 2), munie de tourillons latéraux 20 pivotant dans des paliers 21 afin de permettre le relèvement de l'assemblage 5 vis-à-vis du chariot pour les opérations de chargement ou de déchargement, brièvement mentionnées plus haut.

Le chariot 6 comporte un châssis de support 22 muni latéralement de roues 23, permettant le déplacement de ce chariot sur le chemin 8, en particulier sur des murs porteurs 24 convenablement aménagés pour recevoir et guider ces roues.

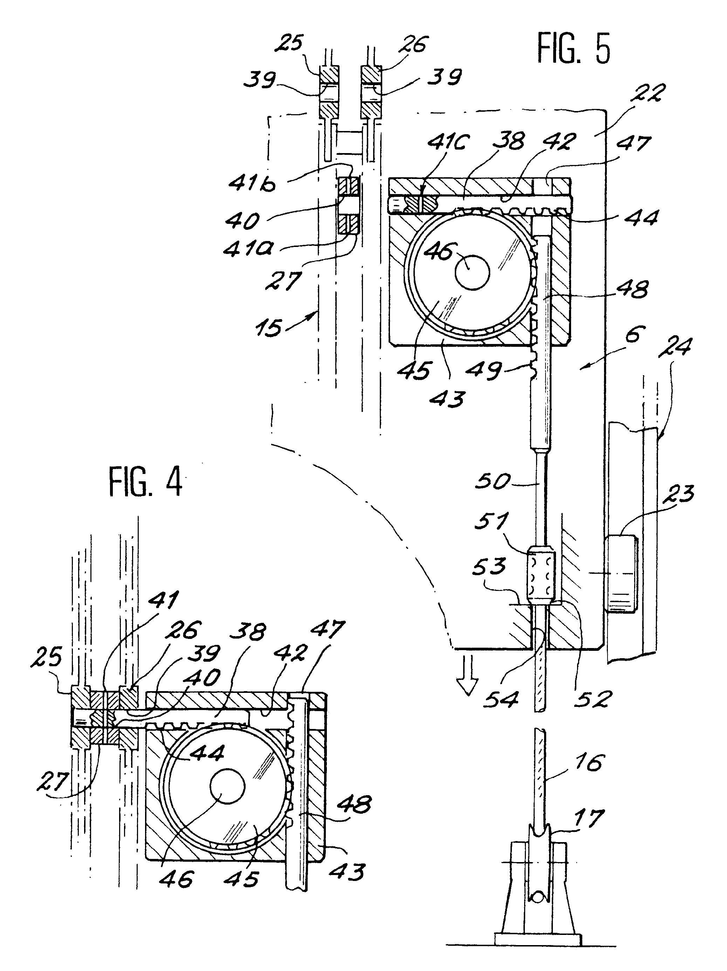

La chaîne de manoeuvre 15 est une chaîne du type "pousseuse-tireuse" et comporte notamment des maillons successifs (Figures 3 et 4), présentant chacun deux joues latérales parallèles, respectivement 25 et 26. Entre les joues d'un quelconque des maillons de la chaîne, de préférence à l'extrémité de celle-ci, est engagée une attache 27, prévue sous le châssis 22 du chariot 6, les joues 25 et 26 étant rendues solidaires de cette attache 27 par un moyen de liaison dont le détail sera explicité ci-après.

Les joues 25 et 26 se prolongent par des languettes 25a et 26a traversées par un axe de liaison 28, comportant, sensiblement dans sa partie centrale, une double collerette 29 délimitant une gorge où s'engagent successivement les dents 30 d'une roue de commande 31.

Celle-ci est solidaire d'un axe horizontal 32 et tourne dans un boîtier 33 prévu entre les murs porteurs 24 du chemin de roulement 8. A une extrémité de l'axe 32 est prévu un pignon conique 34, engrenant avec un pignon de même profil 35, claveté en bout d'un arbre de commande 36, entraîné par un moto-réducteur approprié 37 (Figure 3).

La chaîne 15 dont la structure plus détaillée n'importe pas non plus de façon directe à l'invention, permet selon le sens de la rotation de la roue 31, d'assurer le déplacement du chariot convoyeur 6 vers la droite ou vers la gauche sur la Figure 1, en direction respectivement des régions (I) ou (II). Lorsque la chaîne s'enroule en colimaçon sur elle-même, elle tire ainsi le chariot vers le poste de retrait ou de réception dans la région (II) ; en revanche, lorsque la chaîne se déroule, elle se rigidifie en constituant un bras de vérin du chariot vers la région (I) en direction du poste de chargement-déchargement.

Selon l'invention, la liaison entre l'attache 27, solidaire du chariot convoyeur, et le maillon d'extrémité de la chaîne 15, notamment avec les joues latérales 25 et 26 de ce maillon, est réalisée au moyen d'une broche transversale 38 pénétrant dans des alésages en regard, respectivement 39 et 40, prévus dans les joues d'une part, dans l'attache d'autre part, comme illustré sur la Figure 4. En outre, la broche 38 est immobilisée vis-à-vis de l'attache 27, donc des joues 25 et 26 et par suite de la chaîne 15, au moyen d'une goupille 41 qui s'étend à travers l'attache et la broche, parallèlement aux joues du maillon.

La broche 38 est montée à l'intérieur d'un premier logement 42 de forme correspondante, prévu dans un bloc support 43. Cette broche 38 comporte par ailleurs sur l'un de ses côtés une crémaillère rectiligne 44, le logement 42 étant ouvert latéralement pour permettre aux dents d'un pignon 45, monté dans le bloc support 43, de venir en prise avec la crémaillère 44. Le pignon 45 est solidaire d'un axe 46 s'étendant verticalement sous le châssis 22 du chariot convoyeur (Figure 2), ce pignon 45 étant dans ces conditions sensiblement horizontal.

Le bloc support 43 comporte également un second logement 47 qui s'étend perpendiculairement à la direction du premier logement 42, de manière à recouper ce dernier. A l'intérieur du second logement 47 est montée une seconde broche 48, comportant comme la première une crémaillère rectiligne 49 propre à engrener à son tour avec les dents du pignon 45. Comme on le voit sur les Figures 4 et 5, la position relative des broches 38 et 48 est déterminée par construction de telle sorte que, selon le sens de la rotation du pignon 45, l'une des broches pénètre à l'intérieur du bloc support 43 dans son logement associé en même temps que l'autre sort du bloc par l'extrémité de son propre logement et vice-versa.

La broche 48 est solidaire à l'extérieur du bloc 43 d'une tige 50, terminée par une noix 51 sur laquelle est fixée l'extrémité du câble 16, la liaison entre la noix et le câble étant réalisée par tout moyen approprié, notamment par sertissage, visage ou autre moyen de serrage et de solidarisation souhaité. La noix 51 présente une extrémité 52 propre à venir en appui contre une butée 53 prévue en regard sous le châssis 22, le câble 16 traversant librement cette butée à travers un passage 54.

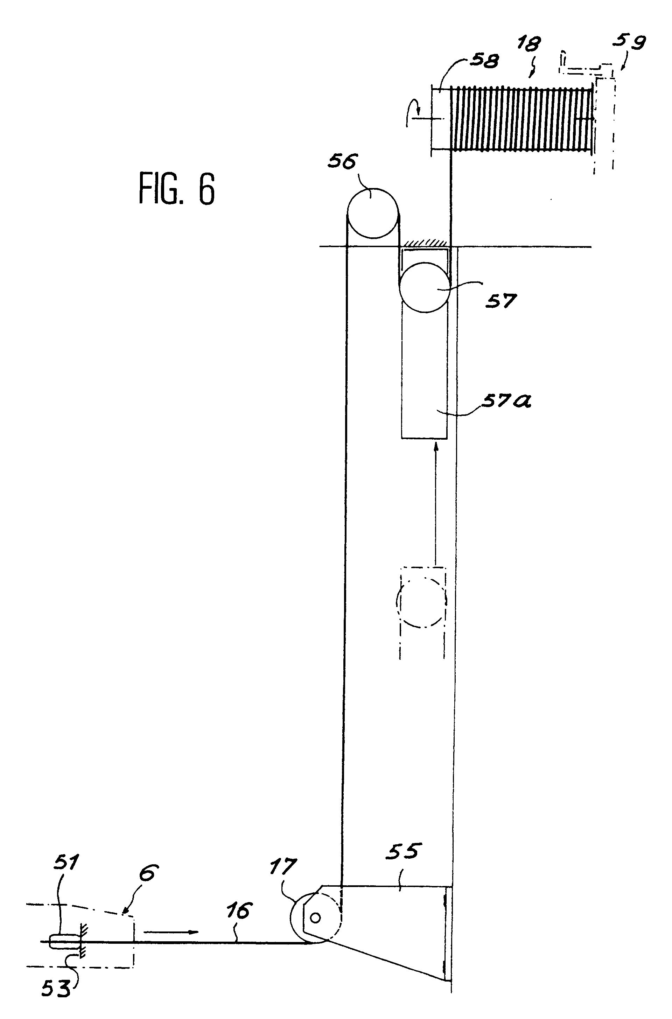

La Figure 6 illustre par ailleurs schématiquement les moyens de commande du câble 16. Celui-ci est tout d'abord amené sur la poulie 17 dont la position est fixée au fond de l'enceinte 14 par une chape de support 55, puis est renvoyé vers le haut sur une seconde poulie 56. Après passage sur cette dernière, le câble 16 est mouflé sur une poulie mobile 57 supportant un contrepoids 57a permettant d'exercer sur le câble un effort le maintenant tendu en permanence. Au delà de la poulie 57, le câble s'enroule sur le tambour 58 du treuil 18, commandé par une manivelle 59 ou par tout autre moyen d'entraînement équivalent.

Le fonctionnement du dispositif selon l'invention se déduit aisément des explications déjà fournies.

En régime de fonctionnement normal, les mouvements du chariot 6 entre ses deux régions (I) et (II), au poste de chargement-déchargement d'une part, de retrait-réception d'autre part, sont réalisés au moyen de la chaîne pousseuse-tireuse 15 qui, selon le sens de son enroulement, provoque les déplacements du chariot sur son chemin de roulement 8 d'un côté ou de l'autre.

En cas d'incident et notamment lors d'un coïncement ou d'un blocage du chariot 6 ou de la chaîne 15, il importe naturellement de pouvoir ramener rapidement le chariot dans la région (II) pour pouvoir procéder, dans des conditions acceptables, aux réparations nécessaires et à l'enlèvement immédiat de l'assemblage qu'il supporte, en particulier s'il s'agit d'un assemblage irradié retiré du coeur.

A cet effet, ce dispositif de secours de l'invention consiste à commander par le treuil 18 le câble 16 dans le sens où ce dernier exerce une traction sur la broche 48 engagée dans son logement 47, la seconde broche 38 étant dans ce cas dans la position illustrée sur la Figure 4 où elle solidarise l'attache 27 et les joues 25 et 26 du maillon d'extrémité de la chaîne 15. L'effort ainsi exercé sur le câble, transmis de la broche 48 à la broche 38 par l'intermédiaire du pignon 45, se répercute sur la goupille de liaison 41 qui, judicieusement calculée, peut alors brusquement se rompre en trois parties 41a et 41b restant immobilisées dans l'attache 27, et 41c prisonnière dans la broche 38, en autorisant le retrait de cette broche et simultanément la sortie progressive de l'autre broche 48, respectivement dans et hors du bloc support 43.

Dès cette rupture, l'attache 27 est libérée de la chaîne 15, le chariot 6 lui-même solidaire de l'attache n'étant plus lié à cette chaîne.

L'effort sur le câble 16 se poursuivant, la noix 51 vient par son extrémité 52 en appui sur la butée 53 prévue sur le châssis 22. A cet instant, le câble 16 peut lui-même entraîner le chariot et le ramener depuis n'importe quelle position de celui-ci sur son chemin de roulement 8 vers le poste de réception (II) dans la partie extérieure de l'enceinte 3.

A noter que l'ensemble de ces opérations est effectué à distance par un opérateur unique, commandant seulement le tambour 58 du treuil 18. Le contact établi entre la noix 51 et la butée 53 déclenche, par tout moyen connu, un signal, confirmant ainsi à l'opérateur qui commence l'entraînement du chariot et le retrait de celui-ci, poursuivi ensuite jusqu'à sa position finale.

On réalise ainsi un dispositif de conception simple et particulièrement sûr qui permet, en cas d'incident quelconque sur la chaîne de manoeuvre du chariot, d'être assuré du retour de ce dernier dans une position permettant de récupérer l'assemblage combustible qu'il supporte. Le câble 16 assure en toutes circonstances la fonction qui lui est dévolue de rappel du chariot, en particulier grâce à la mise en oeuvre d'un moufle et d'un contrepoids, lui permettant en permanence de rester tendu.

Bien entendu, il va de soi que l'invention ne se limite pas à l'exemple de réalisation plus spécialement décrit et représenté ci-dessus, non plus qu'à l'application plus particulière qui a été visée. Notamment, on pourrait prévoir la mise en oeuvre d'un système analogue pour le rappel, en cas d'incident, de tout élément mobile commandé à distance, en particulier du genre monte-charge, ou organe de chargement pour four de traitement thermique, de laminoir, etc...

## Revendications

1. Dispositif de secours pour la commande du déplacement d'un chariot convoyeur d'assemblage de combustible nucléaire, dans lequel le chariot (6) se déplace sous l'effet d'une chaîne pousseuse-tireuse (15) actionnée par un mécanisme d'entraînement provoquant, selon le sens, son enroulement sur elle-même en colimaçon pour tirer le chariot ou son déroulement en formant alors un élément rigide de poussée du chariot, comportant un organe de liaison entre la chaîne et le chariot, constitué de deux parties (27,38) réunies ensemble par une goupille (41) propre à être rompue à la demande pour désolidariser les deux parties et libérer le chariot de la chaîne, caractérisé en ce que la rupture de la goupille est réalisée sous l'effet d'une traction exercée à distance du chariot sur un câble de commande (16) de façon telle que, après cette rupture, le câble puisse provoquer une traction sur le chariot pour le ramener librement indépendamment de la chaîne, dans une position prédéterminée, l'organe de liaison entre la chaîne (15) et le chariot (6) comportant une attache (27), portée en solidaire du chariot et reliée aux deux joues parallèles (25,26) d'un maillon de la chaîne au moyen d'une broche transversale (38), l'attache et la broche étant réunies par la goupille (41) disposée parallèlement aux joues du maillon.

2. Dispositif de secours selon la revendication 1, caractérisé en ce que la broche transversale (38) traverse librement des passages (39,40) disposés en regard dans les joues (25-26) du maillon et l'attache (27) respectivement.

3. Dispositif de secours selon l'une des revendications 1 ou 2, caractérisé en ce que la broche transversale (38) est montée à coulissement dans un premier logement (42) d'un bloc support (43), porté par le chariot (6) et comportant une crémaillère (44) actionnée par un pignon plat (45), monté libre en rotation sur un axe (46) perpendiculaire au pignon et solidaire du bloc support.

4. Dispositif de secours selon la revendication 3, caractérisé en ce que le pignon (45) actionnant la crémaillère (44) de la broche (38) est entraîné en rotation par une autre broche (48) montée dans le bloc support (43) dans un second logement (47) situé dans le plan du premier mais perpendiculaire à celui-ci, cette seconde broche comportant également une crémaillère (49) engrenant avec le pignon de façon telle que la rotation de celui-ci provoque, selon le cas, des déplacements simultanés et opposés des broches respectivement vers l'intérieur et l'extérieur du bloc support.

5. Dispositif de secours selon la revendication 4, caractérisé en ce que la seconde broche (48) est solidarisée à son extrémité extérieure au bloc support (43) d'un élément de liaison (50-51) avec le câble de traction (16).

6. Dispositif de secours selon la revendication 5, caractérisé en ce que l'élément de liaison comporte une noix (51), propre à venir en appui en fin de course de la seconde broche (48) sous l'effet du pignon (45) sur une butée (53) solidaire du chariot de façon telle qu'un effort de traction exercé sur le câble (16) après rupture de la goupille (41), amène la noix contre la butée, en provoquant l'entraînement du chariot par le câble.

7. Dispositif de secours selon l'une quelconque des revendications 3 à 6, caractérisé en ce que le bloc support (43) du pignon (45) est monté dans un boîtier étanche qui est supporté par l'axe (46) de rotation du pignon, lui-même disposé sous la face inférieure du chariot (6).

8. Dispositif de secours selon l'une quelconque des revendications 1 à 7 caractérisé en ce que le câble de traction (16) est actionné par un treuil (18), situé à distance du chariot (6) et sur le tambour (58), duquel s'enroule le câble, guidé vers le chariot jusqu'à l'embout de liaison par des poulies de renvoi (17,56).

9. Dispositif de secours selon la revendication 8, caractérisé en ce que le câble (16) s'enroule sur une poulie mobile (57), munie d'un contrepoids (57a) exerçant une tension constante sur le câble, qui reste tendu en permanence, quelle que soit la position du chariot (6).

10. Dispositif de secours selon l'une quelconque des revendications 1 à 9, caractérisé en ce que le chariot (6) comporte des roues (23) se déplaçant sur des rails s'étendant parallèlement au plan de travail de la chaîne pousseuse-tireuse (15).

11. Dispositif de secours selon la revendication 10, caractérisé en ce que la chaîne (15) s'enroule sur une roue dentée de commande (31), entraînée par un mécanisme de renvoi (34,35,36) à partir d'un ensemble moto-réducteur (37) approprié.

## Patentansprüche

1. Sicherheitsvorrichtung für die Bewegungssteuerung eines Brennelement-kassettenförderwagens, bei dem der Wagen (6) unter der Einwirkung einer Schiebe-Ziehkette (15) bewegt wird, die über einen Antriebsmechanismus betätigt wird, der je nach Richtung das Aufrollen der kette bewirkt, um den Wagen zu ziehen oder das Abwickeln der kette unter Ausbildung eines steifen Schiebeelements für den Wagen mit einem Verbindungsorgan zwischen der kette und dem Wagen, bestehend aus zwei Teilen (27, 38), die über einen Splint (41) miteinander verbunden sind, der dazu bestimmt ist, auf Verlangen abzubrechen, um die beiden Teile voneinander zu lösen und den Wagen von der kette zu trennen, **dadurch gekennzeichnet, daß** der Bruch des Splintes unter Einwirkung einer Zugkraft erfolgt, die aus der Entfernung von dem wagen auf das Steuerseil (16) derart ausgeübt wird, daß nach diesem Bruch das Seil eine Zugkraft auf den Wagen ausüben kann, um diesen frei und unabhängig von der kette in eine vorbestimmte Lage befördern zu können, wobei das Verbindungsorgan zwischen der kette (15) und dem Wagen (6) eine Befestigung (27) aufweist, die am wagen fest angebracht ist und mit zwei parallelen Seitenteilen (25, 26) eines Kettengliedes mittels eines Querzapfens (38) verbunden ist, wobei die Befestigung und der Bolzen über den Splint (41) verbunden sind, der parallel zu den Seitenteilen des Kettengliedes angeordnet ist.

2. Vorrichtung nach Anspruch 1, dadurch gekennzeichnet, daß der Querbolzen (38) die Passagen (39, 40) frei durchquert, die gegenüber den Seitenteilen (25, 26) des Kettengliedes bzw. der Befestigung (27) angeordnet sind.

3. Vorrichtung nach einem der Ansprüche 1 oder 2, dadurch gekennzeichnet, daß der Querbolzen (38) gleitend in einem ersten Lager (42) eines Trägerblocks (43) angeordnet ist, der von dem Wagen (6) getragen wird und eine Zahnstange (44) aufweist, die von einem flachen Zahnrad (45) betätigt wird, die frei beweglich auf einer Achse (46) senkrecht zum Zahnrad und an dem Trägerblock befestigt angeordnet ist.

4. Vorrichtung nach Anspruch 3, dadurch

gekennzeichnet, daß das Zahnrad (45), das die Zahnstange (44) des Bolzens (38) betätigt, durch einen zweiten Bolzen (48) gedreht wird, der in dem Trägerblock (43) in einem zweiten Lager (47) angebracht ist, das in der Ebene des ersteren jedoch senkrecht zu diesem liegt, wobei der zweite Bolzen ebenfalls eine Zahnstange (44) aufweist, die mit dem Zahnrad derart in Eingriff steht, daß die Drehung des Zahnrads gleichzeitige entgegengesetzte Bewegungen der Bolzen entweder auf das Innere oder das Äußere des Trägerblocks zu bewirkt.

5. Vorrichtung nach Anspruch 4, dadurch gekennzeichnet, daß der zweite Bolzen (48) an seinem äußeren Ende am Trägerblock (43) mit einem Verbindungselement (50, 51) fest verbunden ist, das zur Verbindung mit dem Zugseil (16) dient.

6. Vorrichtung nach Anspruch 5, dadurch gekennzeichnet, daß das Verbindungselement eine Muffe (51) aufweist, das bei maximalem Hub des zweiten Bolzens (48) unter Einwirkung des Zahnrads (45) auf einem Anschlag (53) zur Anlage kommt, der mit dem Wagen fest verbunden ist, derart, daß eine Zugbelastung des Seils (16) nach dem Bruch des Splints (41) die Muffe gegen den Anschlag zur Anlage bringt, wodurch der Antrieb des Wagens über das Seil erfolgt.

7. Vorrichtung nach einem der Ansprüche 3 bis 6, dadurch gekennzeichnet, daß der Trägerblock (43) des Zahnrads (45) in einem dichten Gehäuse untergebracht ist, der von der Drehachse (46) des Zahnrads getragen wird, welches selbst unter der Unterseite des Wagens (6) angebracht ist.

8. Vorrichtung nach einem der Ansprüche 1 bis 7, dadurch gekennzeichnet, daß das Zugseil (16) durch eine Winde (18) betätigt wird, auf dessen Trommel (58) das Seil aufgewickelt wird, das zum Wagen über Rückholrollen (17, 56) bis zum Verbindungsansatzstück geführt ist.

9. Vorrichtung nach Anspruch 8, dadurch gekennzeichnet, daß das Seil auf einer beweglichen Rolle (57) rollt und mit einem Gegengewicht (57a) versehen ist, das eine konstante kraft auf das Kabel ausübt, so daß dieses permanent unabhängig von der Lage des Wagens (6) gespannt bleibt.

10. Vorrichtung nach einem der Ansprüche 1 bis 9, dadurch gekennzeichnet, daß der Wagen (6) Räder (23) aufweist, die sich auf Schienen bewegen, die parallel zur Arbeitsebene der Schiebe-Zugkette (15) verlaufen.

11. Vorrichtung nach Anspruch 10, dadurch gekennzeichnet, daß die kette (15) auf einem Steuerzahnrad (31) läuft, das durch einen Umlenkmechanismus (34, 35, 36) ausgehend von einem geeigneten Untersetzungsmotor angetrieben wird.

## Claims

1. Emergency device for the control of the travel of a nuclear fuel assembly conveyor truck, wherein the truck (6) moves under the action of a pusher-puller chain (15), actuated by a driving mechanism effecting, depending on the direction, its spiral winding upon itself to pull the truck, or its unwinding, thus forming a rigid truck pushing member, comprising a linking element between the chain and the chariot, made up of two parts (27, 38) joined together by a pin (41) designed to be broken on demand to disconnect the two parts and release the truck from the chain, characterized in that the breaking of the pin is achieved under the action of a traction exerted remotely from the truck on a control cable (16) so that, after this break, the cable is able to effect a pull on the truck to bring it back freely independently of the chain, to a preset position, the linking element between the chain (15) and the truck (6) having a shackle (27) carried integrally on the truck and connected to the two parallel cheeks (25, 26) of a link of the chain by means of a transversal pin (38), the shackle and the pin being corrected by the pin (41) mounted parallel to the cheeks of the link.

2. Emergency device according to claim 1, characterized in that the transversal pin (38) freely passes through passages (39, 40) situated facing each other in the cheeks (25, 26) of the link and of the shackle (27) respectively.

3. Emergency device according to either claim 1 or 2, characterized in that the transversal pin (38) is mounted to slide in a first housing (42) of a support block (43) carried by the carriage (6) and comprising a rack (44) actuated by a flat pinion (45) mounted for free rotation on an axis (46) perpendicular to the pinion and integral with the support block.

4. Emergency device according to claim 3, characterized in that the pinion (45) actuating the rack (44) of the pin (38) is driven in rotation by another pin (48) mounted in the support block (43) in a second housing (47) situated in the plane of the first, but perpendicular to the latter, this second pin also having a rack (49) engaging with the pinion so that the rotation of the latter brings about, depending upon the case, simultaneous and opposite movements of the pins respectively towards the inside and the outside of the support block.

5. Emergency device according to claim 4, characterized in that the second pin (48) is made integral at its outer end with the support block (43) of a linking element (50,51) with the pulling cable (16).

6. Emergency device according to claim 5, characterized in that the linking element comprises a plug (51) able to abut, at the end of the travel of the second pin (48) under the action of the pinion (45), onto a stop (53) integral with the truck so that a pull exerted on the cable (16) after the breaking of the pin (41) brings the plug against the stop, bringing about the moving along of the truck by the cable.

7. Emergency device according to any one of claims 3 to 6, characterized in that the support block (43) of the pinion (45) is mounted in a sealed casing which is supported by the axis (46) of rotation of the pinion, the latter being disposed below the lower face of the truck (6).

8. Emergency device according to any one of claims 1 to 7, characterized in that the traction cable (16) is actuated by a winch (18) situated at a distance from the truck (6), and on the drum (58) the cable winds, guided towards the truck as far as the correcting piece by return sheaves (17, 56).

9. Emergency device according to claim 8, characterized in that the cable (16) winds on an idler pulley (57) provided with a counterweight (57a) exerting a constant tension on the cable which remains permanently tensioned, whatever the position of the truck (6) may be.

10. Emergency device according to any one of claims 1 to 9, characterized in that the truck (6) has wheels (23) moving on rails extending parallel to the working plane of the pusher-puller chain (15).

11. Emergency device according to claim 10, characterized in that the chain (15) winds on a driving toothed wheel (31) moved by a returning mechanism (34, 35, 36) from a suitable back-geared unit (37).

FIG.1

FIG. 2

FIG. 3

EP 0 360 651 B1

FIG. 5

FIG. 4

FIG. 6